# EUROPEAN PATENT APPLICATION

(11) **EP 4 015 483 A1**
(43) Date of publication of application: **22.06.2022**
(21) Application number: 20892446.4
(22) Date of filing: 26.11.2020
(51) Int. Cl.: C04B 35/10, H01S 5/30

(54) **FLUORESCENT CERAMIC AND PREPARATION METHOD THEREFOR, LIGHT-EMITTING DEVICE, AND PROJECTION DEVICE**

(30) Priority: 26.11.2019 CN 201911175951
(71) Applicant: Shenzhen Lighting Institute, Sheenzhen, Guangdong 518000 (CN)
(72) Inventor: LI, Qian, Shenzhen, Guangdong 518000 (CN); JIAN, Shuai, Shenzhen, Guangdong 518000 (CN); WANG, Yangang, Shenzhen, Guangdong 518000 (CN)
(74) Representative: Savini, Stefania
(86) International application number: PCT/CN2020/131911
(87) International publication number: WO 2021/104399

(57) **Abstract**

Disclosed are fluorescent ceramic and a preparation method therefor, a light-emitting device, and a projection device, relating to the technical field of fluorescent ceramics. The fluorescent ceramic at least comprises: a matrix (101); and light-emitting centers (102), first scattering units (103) and second scattering units (104) which are distributed in the matrix (101), with the refractive index of the first scattering unit (103) being greater than that of the light-emitting center (102), and the refractive index of the second scattering unit (104) being less than that of the light-emitting center (102). In this way, the fluorescence scattering performance of the fluorescent ceramic can be improved, thereby increasing the lighting effect and utilization rate in a light source system.

## Description

### TECHNICAL FIELD

The present disclosure relates to the technical field of fluorescent ceramic, and particularly, to a fluorescent ceramic, a method for manufacturing the fluorescent ceramic, a light-emitting device and a projection device.

### BACKGROUND

Compared with a YAG pure phase ceramic, in a YAG fluorescent ceramic, cerium and other lanthanide elements are doped in YAG, such that a trace amount of cerium element replaces the position of a part of yttrium. Therefore, a YAG fluorescent ceramic can obtain luminous performance and can convert incident light into light with longer wavelength.

During the long-term research and development process, the inventors of the present application discovered that improving the luminous efficiency of fluorescent ceramic is of vital importance. The pure phase ceramic among the fluorescent ceramic is difficult to have a high utilization rate of the excitation light source due to its own structure. When the fluorescent ceramic is excited, light-emitting centers therein are relatively less, resulting in poor luminous efficiency.

Therefore, it is urgently need to obtain a new type of fluorescent ceramic to improve the luminous efficiency of current transparent fluorescent ceramic.

### SUMMARY

The present disclosure provides a fluorescent ceramic and a method for manufacturing the fluorescent ceramic, a light-emitting device and a projection device, which can improve the scattering performance of the fluorescent ceramic to the fluorescent light, thereby improving the light efficiency utilization rate of the light source system.

A first aspect of the present disclosure provides a fluorescent ceramic. The fluorescent ceramic at least includes: a matrix; light-emitting centers, first scattering units, and second scattering units that are distributed in the matrix. The refractive index of the first scattering unit is greater than the refractive index of the light-emitting center. The refractive index of the second scattering unit is smaller than the refractive index of the light-emitting center.

A second aspect of the present disclosure provides a method for manufacturing a fluorescent ceramic. The method includes: formulating a matrix material, a scattering material and fluorescent powder particles of the fluorescent ceramic in a preset ratio, wherein the scattering material at least includes a pore-forming agent, a first scattering particle and a second scattering particle; mixing and ball-milling the matrix material and the scattering material in a first solvent to obtain a first ball-milled slurry; mixing and ball-milling the fluorescent powder particles in a second solvent to obtain a second ball-milled slurry; drying the first ball-milled slurry and the second ball-milled slurry, respectively, and then grinding and sieving to obtain a first powder body and a second powder body; mixing the first powder body and the second powder body, and pressing the mixed powder bodies to obtain a preform; performing a high-temperature binder burnout process on the preform to obtain a green body; performing a cold isostatic pressing treatment on the green body; and performing a high-temperature sintering treatment on the green body, and then polishing the green body to obtain the fluorescent ceramic.

A third aspect of the present disclosure provides a light-emitting device. The light-emitting device includes an excitation light source and the fluorescent ceramic mentioned above. The excitation light source is an incident laser light source.

A fourth aspect of the present disclosure provides a projection device. The projection device includes the light-emitting device mentioned above.

The present disclosure has following beneficial effects. Compared with the related art, in the present disclosure, light-emitting centers with different refractive indices, the first scattering unit, and the second scattering unit are uniformly distributed in the matrix of the fluorescent ceramic. The refractive index of the first scattering unit is greater than the refractive index of the light-emitting center, and the refractive index of the second scattering unit is smaller than the refractive index of the light-emitting center. Since the scattering ability of particles depends on the size and relative refractive index of the particles, the incident laser light may be scattered at the interfaces of various phases. Therefore, it can strengthen the refraction and scattering of the incident laser light and fluorescent light within the fluorescent ceramic to make the excitation light have a longer optical path in the ceramic, thereby weakening the lateral conduction of the fluorescent light within the fluorescent ceramic. Therefore, the fluorescent light is finally scattered out of a small area near the incident laser light, that is, the resulting fluorescent spot is small, thereby further improving the scattering performance of the fluorescent ceramic to the fluorescent light.

### BRIEF DESCRIPTION OF THE DRAWINGS

In order to more clearly illustrate technical solutions of embodiments of the present disclosure, the drawings to be used in the embodiments will be briefly described below. Obviously, the drawings in the following description are some embodiments of the present disclosure. For those skilled in the art, other drawings may also be obtained based on these drawings without paying any creative labor.
FIG. 1 is a structural schematic diagram showing a fluorescent ceramic according to an embodiment of the present disclosure;
FIG. 2 is a flow chart of a method for manufacturing a fluorescent ceramic according to an embodiment of the present disclosure; and
FIG. 3 is a photo showing a microstructure of the fluorescent ceramic manufactured in Example 2.

### DETAIL DESCRIPTION OF EMBODIMENTS

The technical solutions in the embodiments of the present disclosure are clearly and completely described in details with reference to the accompanying drawings. Obviously, the described embodiments are merely part of the embodiments of the present disclosure rather than all of the embodiments. All other embodiments obtained by those skilled in the art based on the embodiments of the present disclosure without paying creative labor shall fall into the protection scope of the present disclosure.

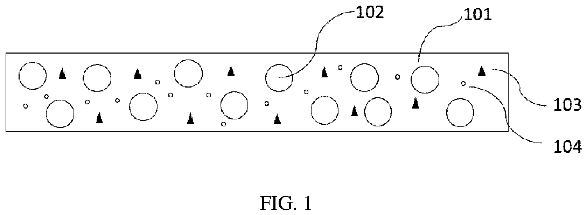

Referring to FIG. 1, FIG. 1 is a structural schematic diagram showing a fluorescent ceramic according to an embodiment of the present disclosure. The fluorescent ceramic at least includes: a matrix 101, light-emitting centers 102, first scattering units 103 and second scattering units 104. The light-emitting center 102, the first scattering unit 103 and the second scattering unit 104 are distributed in the matrix 101.

The matrix 101 can be manufactured from a ceramic raw material. The ceramic raw material can include one of alumina, aluminum nitride, silicon carbide, silicon nitride, and zirconia, which are characterized by low refractive index, good thermal conductivity, and good light transmittance to withstand the temperature during subsequent sintering. In other embodiments, the matrix 101 may be a transparent ceramic having a cubic crystal system and a garnet structure. The light-emitting center 102 may be fluorescent powder with a garnet structure. When the light-emitting center 102 and the matrix 101 each have a garnet structure, the luminous performance and mechanical properties of the fluorescent ceramic can be optimized.

Preferably, the matrix 101 is an alumina matrix, and the light-emitting center 102 is a fluorescent powder. Since the alumina belongs to a trigonal crystal system and has birefringence, there is grain boundary birefringence in the alumina matrix. The incident laser light may be scattered in the fluorescent ceramic due to the grain boundary birefringence. The scattered incident laser light can excite more light-emitting centers in its vicinity, thereby achieving a good luminous efficiency.

However, in the long-term research and development process, the inventors of the present disclosure found that the refractive index of the alumina matrix is very close to the refractive index of the fluorescent powder, both of which are in a range from 1.7 to 1.8, such that the refracting or scattering effect of the fluorescent ceramic to the incident laser light and fluorescent light therein are weak. The incident laser light and fluorescent light are easy to be transmitted to the surroundings in a lateral direction of the ceramic, which will eventually lead to a larger fluorescent spot of the fluorescent ceramic. When the spot diffuses larger, the collection efficiency of a collecting lens is lower, which affects the light efficiency utilization rate of the light source system.

Since the scattering ability of particles depends on the size and relative refractive index of the particles, the inventors of the present disclosure found that, based on a two-phase fluorescent ceramic of the alumina-fluorescent powder, at least the first scattering unit and the second scattering unit each of which has a refractive index quite different from the light-emitting center are distributed in the matrix. The refractive index of the first scattering unit is greater than the refractive index of the light-emitting center, and the refractive index of the second scattering unit is smaller than the refractive index of the light-emitting center. By using the feature of the large difference in refractive index of the first scattering unit, the light-emitting center, and the second scattering unit in the fluorescent ceramic (it can be understood that since the refractive index of the matrix is close to the refractive index of the light-emitting center, a refractive index difference between the first scattering unit and the matrix, and a refractive index difference between the second scattering unit and the matrix are also relatively large), the scattering of incident laser light at the interfaces of various phases is strengthened. By strengthening the refraction and scattering effect of the incident laser light and fluorescence within the fluorescent ceramic, the optical path of the excitation light in the ceramic becomes longer, thereby weakening the lateral conduction of the fluorescent light within the fluorescent ceramic. Therefore, the fluorescent light is finally scattered out of a small area near the incident laser light, that is, the resulting fluorescent spot is small, such that the scattering performance of the fluorescent ceramic to the fluorescent light is further improved, thereby improving the light efficiency utilization rate of the light source system.

Further, Since the light-emitting center 102, the first scattering unit 103, and the second scattering unit 104 are selected to be made of different materials, a refractive index difference between the first scattering unit 103 and the light-emitting center 102 can be varied, and a refractive index difference between the second scattering unit 104 and the light-emitting center 102 can be varied, which is not limited. The refractive index difference between the first scattering unit 103 and the light-emitting center 102 can be in a range from 0.01 to 2.0, e.g., 0.01, 0.4, 0.6, 0.8 or 2.0. The refractive index difference between the second scattering unit 104 and the light-emitting center 102 can be in a range from 0.01-2.0, e.g., 0.01, 0.4, 0.6, 0.8 or 2.0.

Compared with the related art, in the present disclosure, light-emitting centers, the first scattering unit, and the second scattering unit that have different refractive indices are uniformly distributed in the matrix of the fluorescent ceramic. The refractive index of the first scattering unit is greater than the refractive index of the light-emitting center, and the refractive index of the second scattering unit is smaller than the refractive index of the light-emitting center. Since the scattering ability of particles depends on the size and relative refractive index of the particles, the incident laser light may be scattered at the interfaces of various phases. Therefore, it can strengthen the refraction and scattering of the incident laser light and fluorescent light within the fluorescent ceramic to make the excitation light have a longer optical path in the ceramic, thereby weakening the lateral conduction of the fluorescent light within the fluorescent ceramic. Therefore, the fluorescent light is finally scattered out of a small area near the incident laser light, that is, the resulting fluorescent spot is small, such that the scattering performance of the fluorescent ceramic to the fluorescent light is further improved, thereby improving the light efficiency utilization rate of the light source system.

In an embodiment, the first scattering unit 103 is at least one of air holes or first scattering particles.

When the above air holes have a refractive index of 1, and an aperture diameter of 0.2 µm to 2 µm, the excitation light source has a better scattering effect. The aperture diameter of the air hole may be 0.2 µm, 0.8 µm, 1.0 µm, or 2.0 µm.

It should be noted that the aperture diameter of the air hole in this embodiment refers to a diameter of the air hole when the air holes are spherical; and refers to a diameter of the smallest circumscribed sphere of the air hole when the air holes are non-spherical.

In order to avoid affecting the light transmittance of the fluorescent ceramic due to too many or too few air holes, the volume fraction of the air holes in the fluorescent ceramic in this embodiment is in a range from 0.01% to 10%, e.g., 0.01%, 0.1%, 1%, 5%, or 10%.

In an embodiment, the refractive index of the first scattering particles is in a range from 1.2 to 3.5, e.g., 1.2, 1.7, 2.1, 2.5, or 3.5. The first scattering particles account for 0.1% to 1%, e.g., 0.1%, 0.5%, 0.8%, or 1%, of the total mass of the fluorescent ceramic.

The above first scattering particles may be selected from at least one of titanium dioxide, zirconium oxide, yttrium oxide, calcium fluoride or magnesium fluoride.

Further, the second scattering unit 104 is selected from at least one of air holes or second scattering particles.

When the air holes have a refractive index of 1, and an aperture diameter of 0.2 µm to 2 µm, the excitation light source has a better scattering effect. The aperture diameter of the air holes may be 0.2 µm, 0.8 µm, 1.0 µm, or 2.0 µm.

It should be noted that the aperture diameter of the air hole in this embodiment refers to a diameter of the air hole when the air holes are spherical; and refers to a diameter of the smallest circumscribed sphere of the air hole when the air holes are non-spherical.

In order to avoid affecting the light transmittance of the fluorescent ceramic due to too many or too few air holes, the volume fraction of the air holes in the fluorescent ceramic in this embodiment is in a range from 0.01% to 10%, e.g., 0.01%, 0.1%, 1%, 5%, or 10%.

In an embodiment, the refractive index of the second scattering particles is in a range from 1.2 to 2.5, e.g., 1.2, 1.4, 1.6, 1.8, or 2.5. The second scattering particles account for 0.1% to 1%, e.g., 0.1%, 0.5%, 0.8%, or 1% of the total mass of the fluorescent ceramic.

The above second scattering particles may be at least one of calcium fluoride, magnesium fluoride, yttrium oxide or zirconium oxide.

In an embodiment, in order to further improve the scattering effect of the fluorescent ceramic, the fluorescent ceramic further includes: third scattering units (not shown in the drawings) distributed in the matrix 101.

The refractive index of the third scattering unit is between the refractive index of the first scattering unit 103 and the refractive index of the second scattering unit 104.

Further, when the light-emitting center 102, the first scattering unit 103, the second scattering unit 104 and the third scattering unit are selected to be made of different materials, a refractive index difference between the first scattering unit 103 and the third scattering unit can be varied, a refractive index difference between the second scattering unit 104 and the third scattering unit can be varied, and a refractive index difference between the light-emitting center and the third scattering unit can be varied, which are not limited. An absolute difference between the refractive index of the third scattering unit and the refractive index of the first scattering unit 103 can be in a range from 0.6 to 1.5, e.g., 0.6, 0.8, 1.0, or 1.5. An absolute difference between the refractive index of the third scattering unit and the refractive index of the second scattering unit 104 can be in a range from 0.6 to 1.5, e.g., 0.6, 0.8, 1.0, or 1.5.

In an embodiment, the third scattering units are at least one of air holes or third scattering particles. The refractive index of the third scattering particles is in a range from 1.2 to 2.5, e.g., 1.2, 1.4, 1.6, 1.8 or 2.5. The third scattering particles account for 0.1% to 1%, e.g., 0.1%, 0.5%, 0.8%, or 1% of the total mass of the fluorescent ceramic.

In an embodiment, the light-emitting center 102 is a lanthanide-doped YAG fluorescent powder particle with a particle diameter of 5 µm to 30 µm, e.g., 5 µm, 10 µm, 20 µm, or 30 µm. The doping amount is in a range from 1% to 5%, e.g., 1%, 2%, 3%, or 5%. The lanthanide-doped YAG fluorescent powder particles account for 40% to 50%, e.g., 40%, 42%, 45% or 50%, of the total mass of the fluorescent ceramic.

It can be understood that the fluorescent powder as the light-emitting center 102 must have a sufficient amount to ensure the luminous intensity of the fluorescent ceramic. When the lanthanide-doped YAG fluorescent powder particles account for 40% to 50% of the total mass of the fluorescent ceramic, since the light-emitting center 102 has a large grain size, the luminous efficiency is improved, there is no impurity phase, the grain boundary is pure and the light homogenizing performance is good, which can meet the use requirements of high-power light sources with incident laser light. Meanwhile, due to the addition of scattering particles, when the incident laser light irradiates the scattering particles, the excitation light source is scattered. After the excitation light source is scattered, the optical path of the excitation light becomes longer, thereby improving light conversion efficiency.

The material of the matrix 101 is alumina with a particle diameter of 0.05 µm to 1 µm, e.g., 0.05 µm, 0.1 µm, 0.5 µm, or 1.0 µm. Alumina accounts for 40% to 60%, e.g., 40%, 50%, 55% or 60%, of the total mass of the fluorescent ceramic.

In an embodiment, the lanthanide-doped YAG fluorescent powder particles are Ce-doped or Lu-doped YAG fluorescent powder particles.

In an embodiment, 1% to 5% of Ce is doped in the YAG matrix 101. In other embodiments, Lu can be doped in the YAG matrix 101 such that the YAG matrix 101 can also emit light, which can be used as luminous supplement to the fluorescent ceramic. In the embodiment, the YAG matrix 101 is used as a bonding medium to bond YAG fluorescent powder particles with large grain sizes. Further, by adjusting the doping content of Ce or Lu in the bonding medium, the adjustable color coordinate of the fluorescent ceramic can be achieved within a certain range. The YAG matrix 101 and the YAG fluorescent powder particles with large grain size have different doping contents, and have different fluorescent spectrum range. The YAG matrix 101 and the YAG fluorescent powder particles with large grain size complement each other and improve the color rendering of incident laser light. The scattering particles with high refractive index are uniformly distributed in the fluorescent ceramic. When the incident laser light is irradiated on the scattering particles, the excitation light source is scattered. After the excitation light source is scattered, the optical path of the excitation light in the ceramic becomes longer, thereby increasing the light conversion efficiency.

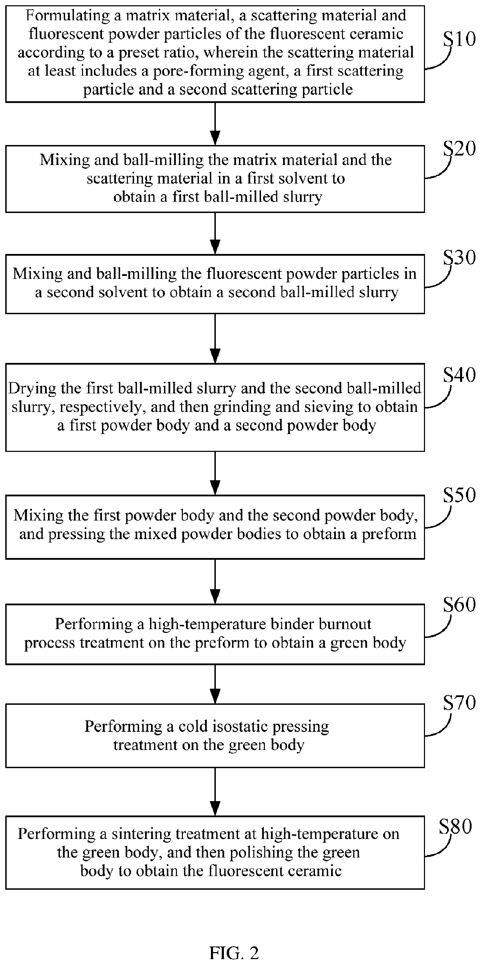

FIG. 2 is a flow chart of a method for manufacturing a fluorescent ceramic according to an embodiment of the present disclosure. The present disclosure also provides a method for manufacturing a fluorescent ceramic. The method includes following steps.

In S10, a matrix material, a scattering material and fluorescent powder particles of the fluorescent ceramic are formulated according to a preset ratio.

In an embodiment, the matrix material can be alumina with a purity of 99.0% and a particle diameter of 0.05 µm to 1 µm. The fluorescent powder particles can be selected from lanthanide-doped YAG fluorescent powder particles with a purity of 99.0% and a particle diameter of 5 µm to 30 µm.

The scattering material at least includes a pore-forming agent and first scattering particles and second scattering particles.

The pore-forming agent is starch with a particle diameter of 0.1 µm to 10 µm, e.g., 0.1 µm, 1 µm, or 10 µm, or PMMA microspheres with a particle diameter ranging from 0.1 µm to 10 µm, e.g., 0.1 µm, 1 µm, or 10 µm. The first scattering particles can be selected from at least one of titanium dioxide, zirconium oxide, yttrium oxide, calcium fluoride or magnesium fluoride, each of which has a purity of 99.0%. The second scattering particles can be selected from at least one of calcium fluoride, magnesium fluoride, yttrium oxide or zirconium oxide, each of which has a purity of 99.0%.

In S20, the matrix material and the scattering material are mixed and ball-milled in a first solvent to obtain a first ball-milled slurry.

In an embodiment, the matrix material and the scattering material are mixed according to a preset ratio, and put into a ball-milling tank for ball-milling and mixing, in which the first solvent used as a liquid phase medium. The ball-milling speed is 120r/min to 300r/min. After ball-milling is performed for 1h to 4h, a first ball-milled slurry is obtained. The first solvent can be one of silicone oil including various systems of phenyl, methyl, etc.; ethanol; ethylene glycol; xylene; ethyl cellulose; terpineol; butyl carbitol; PVA; PVB; PAA; PEG; or mixtures thereof.

In S30, the fluorescent powder particles are mixed and ball-milled in a second solvent to obtain a second ball-milled slurry.

In an embodiment, the second solvent used as a liquid phase medium. The fluorescent powder particles are put into a ball-milling tank for ball-milling and mixing. The ball-milling speed is 120r/min to 300r/min. After ball-milling is performed for 0.5h to 4h, a second ball-milled slurry is obtained. The second solvent can be one of silicone oil including various systems of phenyl, methyl, etc.; ethanol; ethylene glycol; xylene; ethyl cellulose; terpineol; butyl carbitol; PVA; PVB; PAA; PEG; or mixtures thereof.

In S40, the first ball-milled slurry and the second ball-milled slurry are dried, respectively, and then ground and sieved to obtain a first powder body and a second powder body.

In an embodiment, before being dried, the first ball-milled slurry and the second ball-milled slurry can be defoamed in vacuum, such that the first ball-milled slurry and the second ball-milled slurry have low bubble amount or even bubble-free, thereby being suitable for tape casting. The first ball-milled slurry and the second ball-milled slurry are dried in a vacuum at a constant temperature to obtain a dry powder. The dry powder is calcined in a muffle furnace to remove organic components in the dry powder. Then the powder is sieved and granulated to obtain the first powder body and the second powder body.

In S50, the first powder body and the second powder body are mixed, the mixed powder bodies are pressed to obtain a preform.

In an embodiment, the first powder body and the second powder body are weighed with an appropriate amount, and then filled into a graphite mold. The mixed powder bodies are pressed. The pressing method is not particularly limited, which can be conventional pressing methods such as cold isostatic pressing and the like. A pressure for pressing is usually in a range from 5 MPa to 200 MPa, preferably 15 MPa to 100 MPa. If the pressure is too small, air holes will be more and larger, which may affect compactness of the final sintered product.

In S60, the preform is subjected to a high temperature binder burnout process to obtain a green body.

In an embodiment, a crucible loaded with the preform is put into a muffle furnace near a thermocouple to start a binder burnout process. The binder burnout process can be as follows: the ceramic billet is heated to 200°C at a heating rate of 0.3°C/min to 0.6°C/min and preserved for 0 hour to 2 hours to remove moistures such as free water and crystal water in the billet. Then, the temperature rises to 500°C at a heating rate of 0.4°C/min to 0.7°C/min for 0 hour to 3 hours to decompose and volatilize organic matter in the billet. Then, the temperature rises to a densification temperature at a heating rate of 0.4°C/min to 0.7°C/min for 2 hours to 6 hours. Through this process, the ceramic billet can have a certain strength and will not collapse. The densification temperature is generally lower than the sintering temperature of the ceramic by 300°C to 1000°C, such that the raw material powder body and the ceramic billet are prevented from performing the sintering process, thereby facilitating the removal of the raw material powder. The cooling manner is furnace cooling in an air atmosphere. Through the binder burnout process, not only the moisture and organic matter in the billet are removed, but also the billet achieves uniform shrinkage and a certain degree of densification. The volume shrinkage of the billet is in a range from 4% to 30% and a weight loss of the billet is in a range from 20% to 50%.

In S70, a cold isostatic pressing treatment is performed on the green body.

In an embodiment, after the binder burnout process, the fluorescent ceramic green body is subjected to a cold isostatic pressing treatment under a pressure of 150 MPa to 200 MPa to increase the compactness of the fluorescent ceramic green body.

In S80, a high-temperature sintering treatment is performed on the green body, and then the green body is polished to obtain the fluorescent ceramic.

The ceramic billet after the binder burnout process is placed into the muffle furnace under an air atmosphere again, heated to the sintering temperature at a heating rate of 1°C/min to 3°C/min, preserved for 1 hour to 12 hours, then a furnace cooling process is performed such that the ceramic billet is cooled to room temperature, and then polished to obtain the fluorescent ceramic.

The fluorescent ceramic obtained through the heat treatment is further processed by a reduction treatment step. The reduction treatment step of the fluorescent ceramic is carried out in a reducing atmosphere (e.g., a nitrogen/hydrogen mixed gas) and at a temperature of 1200°C to 1650°C which is slightly lower than the heat treatment sintering temperature. The reduction treatment process can remove the impurities attached to the fluorescent ceramic in the heat treatment step, such that the impurities are prevented from becoming a heat generating center of the fluorescent ceramic in the working environment, which may affect the use of the fluorescent ceramic.

Preferably, the matrix of the fluorescent ceramic is an alumina matrix, and the light-emitting center is a fluorescent powder. Since the alumina belongs to a trigonal crystal system and has birefringence, there is grain boundary birefringence in the alumina matrix. The incident laser light may be scattered in the fluorescent ceramic due to the grain boundary birefringence. The scattered incident laser light can excite more light-emitting centers in its vicinity, thereby achieving a good luminous efficiency.

However, in the long-term research and development process, the inventors of the present disclosure found that the refractive index of the alumina matrix is very close to the refractive index of the fluorescent powder, both of which are in a range from 1.7 to 1.8, such that the refracting or scattering effect of the incident laser light and fluorescent light by the fluorescent ceramic are weak. The incident laser light and fluorescent light are easy to be transmitted to the surroundings in a lateral direction of the ceramic, which will eventually lead to a larger fluorescent spot of the fluorescent ceramic. When the spot diffuses larger, the collection efficiency of a collecting lens is lower, which affects the light efficiency utilization rate of the light source system.

Since the scattering ability of particles depends on the size and relative refractive index of the particles, the inventors of the present disclosure found that, based on a two-phase fluorescent ceramic of the alumina-fluorescent powder, at least the first scattering unit and the second scattering unit each of which has a refractive index quite different from the light-emitting center are distributed in the matrix. The refractive index of the first scattering unit is greater than the refractive index of the light-emitting center, and the refractive index of the second scattering unit is smaller than the refractive index of the light-emitting center. By using the feature of the large difference in refractive index of the first scattering unit, the light-emitting center, and the second scattering unit in the fluorescent ceramic (it can be understood that since the refractive index of the matrix is close to the refractive index of the light-emitting center, a refractive index difference between the first scattering unit and the matrix, and a refractive index difference between the second scattering unit and the matrix are also relatively large), the scattering of incident laser light at the interfaces of various phases is strengthened. By strengthening the refraction and scattering effect of the incident laser light and fluorescence within the fluorescent ceramic, the optical path of the excitation light in the ceramic becomes longer, thereby weakening the lateral conduction of the fluorescent light within the fluorescent ceramic. Therefore, the fluorescent light is finally scattered out of a small area near the incident laser light, that is, the resulting fluorescent spot is small, such that the scattering performance of the fluorescent ceramic to the fluorescent light is further improved, thereby improving the light efficiency utilization rate of the light source system.

Compared with the related art, in the present disclosure, light-emitting centers, the first scattering unit, and the second scattering unit that have different refractive indices are uniformly distributed in the matrix of the fluorescent ceramic. The refractive index of the first scattering unit is greater than the refractive index of the light-emitting center, and the refractive index of the second scattering unit is smaller than the refractive index of the light-emitting center. Since the scattering ability of particles depends on the size and relative refractive index of the particles, the incident laser light may be scattered at the interfaces of various phases. Therefore, it can strengthen the refraction and scattering of the incident laser light and fluorescent light within the fluorescent ceramic to make the excitation light have a longer optical path in the ceramic, thereby weakening the lateral conduction of the fluorescent light within the fluorescent ceramic. Therefore, the fluorescent light is finally scattered out of a small area near the incident laser light, that is, the resulting fluorescent spot is small, such that the scattering performance of the fluorescent ceramic to the fluorescent light is further improved, thereby improving the light efficiency utilization rate of the light source system.

Examples are further listed below to illustrate the present disclosure in detail. It should also be understood that following examples are only used to further illustrate the present disclosure, and cannot be construed as limiting the protection scope of the present disclosure. Some non-substantial improvements and adjustments made by those skilled in the art based on the above content of the present disclosure fall into the protection scope of the present disclosure. The specific process parameters in the following Examples are only exemplary appropriate range, that is, those skilled in the art can select within the appropriate range through the description herein, which are not limited to the specific values illustrated below.

### Example 1

Alumina powder, zirconia powder and magnesium fluoride powder that have a purity of 99.0% or more, were selected. Based on mass percentages, 99.0% of alumina powder, 0.5% of zirconia powder and 0.5% of magnesium fluoride powder were weighed, and were wet ball-milled for 24 hours to grind the mixing powder body raw materials by using absolute ethanol as a medium, such that a first ball-milled slurry was obtained.

The YAG:Ce fluorescent powder that accounts for 50% of the total mass of the fluorescent ceramic powder body was weighed, and was wet ball-milled for 1 hour to grind the mixing powder body raw materials by using a PVB ethanol solution as a medium, such that a second ball-milled slurry was obtained. A mass percentage of PVB in the PVB ethanol solution is in a range from 0.5% to 2%. The mass percentage means a percentage of the mass of a certain substance to a total mass, and here refers to a percentage of the mass of PVB accounting for the total mass of the solution composed of PVB and ethanol.

The first ball-milled slurry and the second ball-milled slurry were dried in vacuum at 70°C, then ground and sieved, and collected for later use.

The mixed fluorescent ceramic powder body was pressed into a block under a pressure of 80 MPa. The molded ceramic green body was place in a muffle furnace to perform a binder burnout process at a temperature of 500°C for 2 hours and then at a temperature of 900°C for 4 hours. After the binder burnout process, the fluorescent ceramic green body was subjected to cold isostatic pressing under a pressure of 200 MPa to increase the compactness of the ceramic green body.

The ceramic green body was placed in a vacuum furnace with a vacuum degree of 10⁻³ Pa and sintered at 1650°C for 4 hours. After being sintered in vacuum, the fluorescent ceramic was annealed in an air atmosphere at 1300°C for 10 hours, and then was thinned and polished, such that an available fluorescent ceramic was finally obtained.

### Example 2

Alumina powder with a purity of 99.9%, titanium oxide with a purity of 99%, and a pore-forming agent, were selected. Based on mass percentages, 98.0% of alumina powder, 1.0% of the titanium oxide powder and 1.0% of the pore-forming agent were weighed, and were wet ball-milled for 24 hours to grind the mixing powder body raw materials by using absolute ethanol as a medium, such that a first ball-milled slurry was obtained.

The YAG:Ce fluorescent powder that accounts for 40% of the total mass of the fluorescent ceramic powder body was weighed, and was wet ball-milled for 0.5 hour to grind the mixing powder body raw materials by using a PVB ethanol solution as a medium, such that a second ball-milled slurry was obtained. A mass percentage of PVB in the PVB ethanol solution is in a range from 0.5% to 2%. The mass percentage means a percentage of the mass of a certain substance to a total mass, and here refers to a percentage of the mass of PVB accounting for the total mass of the solution composed of PVB and ethanol.

The first ball-milled slurry and the second ball-milled slurry were dried in vacuum at 60°C, then ground and sieved, and collected for later use.

The mixed fluorescent ceramic powder body was pressed into a block under a pressure of 50 MPa. The molded ceramic green body was placed in a muffle furnace to perform a binder burnout process at a temperature of 600°C for 2 hours and then at a temperature of 1000°C for 6 hours. After the binder burnout process, the fluorescent ceramic green body was subjected to cold isostatic pressing under a pressure of 180 MPa to increase the compactness of the ceramic green body.

The ceramic green body was placed in a vacuum furnace with a vacuum degree of 10⁻³ Pa and sintered at 1600°C for 4 hours. After being sintered in vacuum, the fluorescent ceramic was annealed in an air atmosphere at 1350°C for 10 hours, and then was thinned and polished, such that an available fluorescent ceramic was finally obtained.

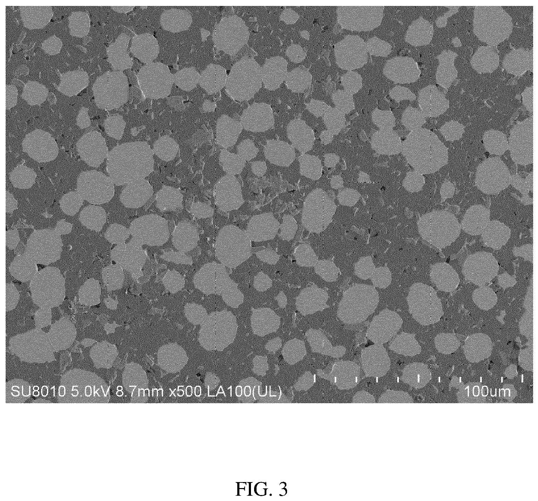

Referring to FIG. 3, FIG. 3 is a photo showing a microstructure of the fluorescent ceramic manufactured in Example 2. As shown from FIG. 3,the fluorescent powder particles are uniformly distributed in the alumina ceramic matrix, and there are still a small amount of low refractive index phase (air holes) and high refractive index phase (titanium oxide).

### Example 3

Alumina powder, magnesium fluoride, titanium oxide and zirconium oxide that have a purity of 99.9% or more, were selected. Based on mass percentages, 99.0% of alumina powder, 0.30% of magnesium fluoride, 0.30% of titanium oxide and 0.40% of zirconium oxide were weighed, and were wet ball-milled for 36h to grind the mixing powder body raw materials by using absolute ethanol as a medium, such that a first ball-milled slurry was obtained.

The YAG:Ce fluorescent powder that accounts for 60% of the total mass of the fluorescent ceramic powder body was weighed, and was wet ball-milled for 0.5 hour to grind the mixing powder body raw materials by using a PVB ethanol solution as a medium, such that a second ball-milled slurry was obtained. A mass percentage of PVB in the PVB ethanol solution is in a range from 0.5% to 2%. The mass percentage means a percentage of the mass of a certain substance to a total mass, and here refers to a percentage of the mass of PVB accounting for the total mass of the solution composed of PVB and ethanol.

The first ball-milled slurry and the second ball-milled slurry were dried in vacuum at 70°C, then ground and sieved, and collected for later use.

The ceramic green body was filled in a graphite mold to perform pre-pressing treatment under a pressure of 5 MPa to 20 MPa. Subsequently, the graphite mold was placed in the SPS hot press furnace. The ceramic green body was sintered in a vacuum/argon atmosphere under a temperature of 1200°C to 1600°C and at a pressure of 20 MPa to 150MPa for 0.5 hour to 4 hours. After being sintered with hot pressing, the fluorescent ceramic was annealed in an air atmosphere at 1300°C for 10 hours, and then was thinned and polished, such that an available fluorescent ceramic was finally obtained.

### Comparative Example

Alumina powder, and YAG:Ce fluorescent powder that have a purity of 99.9% or more, were selected. Based on mass percentages, 50.0% of alumina powder and 50.0% of YAG:Ce fluorescent powder were weighed, and were wet ball-milled for 36 hours to grind the mixing powder body raw materials by using absolute ethanol as a medium, such that a slurry was obtained.

The slurry were dried in vacuum at 70°C, then ground and sieved, and collected for later use.

The ceramic powder body was filled in a graphite mold to perform pre-pressing treatment under a pressure of 5 MPa to 20 MPa. Subsequently, the graphite mold was placed in the SPS hot press furnace. The ceramic powder body was sintered in a vacuum/argon atmosphere under a temperature of 1200°C to 1600°C and at a pressure of 20 MPa to 150 MPa for 0.5 hour to 4 hours. After being sintered with hot pressing, the fluorescent ceramic was annealed in an air atmosphere at 1300°C for 10h, and then was thinned and polished, such that an available fluorescent ceramic was finally obtained.

### Example 4

The fluorescent ceramics manufactured in Example 1, Example 2, and Example 3 and the fluorescent ceramic that have not been optimized (i.e. Comparative Example) were processed into test samples, which were placed in a test platform for test comparison. The test results obtained are shown as follows. The light efficiency in the table refers to a light power conversion efficiency of incident blue laser light.

| Ceramic sample | Current (A) | Power density (w/mm²) | Light efficiency (lm/W) |
|---|---|---|---|
| Comparative Example | 1.0 | 24.38 | 182.10 |
| | 1.2 | 32.53 | 172.36 |
| | 1.4 | 40.52 | 164.07 |
| Example 1 | 1.0 | 24.38 | 187.85 |
| | 1.2 | 32.53 | 180.61 |
| | 1.4 | 40.52 | 171.13 |
| Example 2 | 1.0 | 24.38 | 191.69 |
| | 1.2 | 32.53 | 183.36 |
| | 1.4 | 40.52 | 176.42 |
| Example 3 | 1.0 | 24.38 | 194.67 |
| | 1.2 | 32.53 | 182.46 |
| | 1.4 | 40.52 | 174.41 |

It can be seen from the above table that since the light-emitting centers, the first scattering units, and the second scattering units that have different refractive indices are uniformly distributed in the matrix of the fluorescent ceramic of Examples 1 to 3, and there is a large difference in refractive indexs of the first scattering unit, the light-emitting center, and the second scattering unit in the fluorescent ceramic (it can be understood that since the refractive index of the matrix is close to the refractive index of the light-emitting center, a refractive index difference between the first scattering unit and the matrix, and a refractive index difference between the second scattering unit and the matrix are also relatively large), and since the scattering ability of particles depends on the size and relative refractive index of the particles, the incident laser light may be scattered at the interfaces of various phases, the refraction and scattering effect of the incident laser light and fluorescence within the fluorescent ceramic can be strengthened, such that the optical path of the excitation light in the ceramic becomes longer, thereby weakening the lateral conduction of the fluorescent light within the fluorescent ceramic. Therefore, the fluorescent light is finally scattered out of a small area near the incident laser light, that is, the resulting fluorescent spot is small, such that the scattering performance of the fluorescent ceramic to the fluorescent light is further improved, thereby improving the light efficiency utilization rate of the light source system.

The present disclosure also provides a light-emitting device. The light-emitting device includes an excitation light source and the above fluorescent ceramic. The excitation light source is an incident laser light source. The fluorescent ceramic is irradiated by the excitation light source to generate light with high brightness. The light-emitting device can be applied to a projection system and a display system, e.g., a liquid crystal display (LCD) projector or a digital light processor (DLP) projector. The light-emitting device can also be applied to a lighting system, e.g., an auto-Illuminator; or applied in the field of 3D display technologies. In the light-emitting device, the above fluorescent ceramic can also be made into a movable device, e.g., a color wheel, such that the excitation light emitted by the excitation light source is incident on the rotating color wheel to generate excitation light.

The present disclosure also provides a projection device. The projection device may be an education projector, incident laser TV, micro-projector or cinema machine, and the like. The projection device includes the light-emitting device in the above embodiments. The specific structure of the light-emitting device can refer to the above embodiments.

The above are merely some embodiments of the present disclosure, which, as mentioned above, are not intended to limit the present disclosure. Any equivalent structure or equivalent process transformation made by using the content of the description and drawings of the present disclosure which are directly or indirectly applied to other related art shall fall into the protection scope of the present disclosure.

## Claims

1. A fluorescent ceramic, **characterized in that**, the fluorescent ceramic at least comprises:
a matrix; and
a plurality of light-emitting centers, a plurality of first scattering units and a plurality of second scattering units that are distributed in the matrix,
wherein each of the plurality of first scattering units has a refractive index greater than a refractive index of each of the plurality of light-emitting centers; and
each of the plurality of second scattering units has a refractive index smaller than the refractive index of each of the plurality of light-emitting centers.

2. The fluorescent ceramic according to claim 1, **characterized in that**, each of the plurality of first scattering units is at least one of air holes or first scattering particles.

3. The fluorescent ceramic according to claim 2, **characterized in that**, the air holes have a refractive index of 1, and an aperture diameter ranging from 0.2 µm to 2 µm, and account for 0.01% to 10% of a volume of the fluorescent ceramic.

4. The fluorescent ceramic according to claim 2, **characterized in that**, the first scattering particles have a refractive index ranging from 1.2 to 2.8, and account for 0.1% to 1% of a total mass of the fluorescent ceramic; and
the first scattering particles are selected from at least one of titanium dioxide, zirconium oxide, yttrium oxide, calcium fluoride or magnesium fluoride.

5. The fluorescent ceramic according to claim 1, **characterized in that**, each of the plurality of second scattering units is at least one of air holes or second scattering particles.

6. The fluorescent ceramic according to claim 5, **characterized in that**, the air holes have a refractive index of 1, and an aperture diameter ranging from 0.2 µm to 2 µm, and account for 0.01% to 10% of a volume of the fluorescent ceramic.

7. The fluorescent ceramic according to claim 5, **characterized in that**, the second scattering particles have a refractive index of 1.2 to 2.1, and account for 0.1% to 1% of a total mass of the fluorescent ceramic; and
wherein the second scattering particles are selected from at least one of calcium fluoride, magnesium fluoride, yttrium oxide or zirconium oxide.

8. The fluorescent ceramic according to claim 1, **characterized in that**, the fluorescent further comprises a plurality of third refractive index units distributed in the matrix, wherein each of the plurality of third refractive index units has a refractive index between the refractive index of each of the plurality of first scattering units and the refractive index of each of the plurality of second scattering units.

9. The fluorescent ceramic according to claim 1, **characterized in that**, the each of plurality of light-emitting centers is a lanthanide-doped YAG fluorescent powder particle with a particle diameter ranging from 5 µm to 30 µm and a doping amount ranging from 1% to 5%, and the lanthanide-doped YAG fluorescent powder particles of the plurality of light-emitting centers account for 40% to 50% of the total mass of the fluorescent ceramic; and
wherein the matrix is made of alumina with a particle diameter ranging from 0.05 µm to 1 µm, and the alumina accounts for 40% to 60% of the total mass of the fluorescent ceramic.

10. The fluorescent ceramic according to claim 9, **characterized in that**, the lanthanide-doped YAG fluorescent powder particle is a Ce-doped YAG fluorescent powder particle or a Lu-doped YAG fluorescent powder particle.

11. A method for manufacturing a fluorescent ceramic, **characterized in that**, the method comprising:
formulating a matrix material, a scattering material and fluorescent powder particles of the fluorescent ceramic in a preset ratio, wherein the scattering material at least includes a pore-forming agent, a first scattering particle and a second scattering particle;
mixing and ball-milling the matrix material and the scattering material in a first solvent to obtain a first ball-milled slurry;
mixing and the ball-milling the fluorescent powder particles in a second solvent to obtain a second ball-milled slurry;
drying the first ball-milled slurry and the second ball-milled slurry, respectively, and then grinding and sieving to obtain a first powder body and a second powder body;
mixing the first powder body and the second powder body to obtain a mixed powder body, and pressing the mixed powder body to obtain a preform;
performing a high-temperature binder burnout process treatment on the preform to obtain a green body;
performing a cold isostatic pressing treatment on the green body; and
performing a high-temperature sintering treatment on the green body, and then polishing the green body to obtain the fluorescent ceramic.

12. A light-emitting device, **characterized in that**, the light-emitting device comprises an excitation light source and the fluorescent ceramic according to any one of claims 1 to 10, wherein the excitation light source is an incident laser light source.

13. A projection device comprising the light-emitting device according to claim 12.
